Europäisches Patentamt

**European Patent Office**

**Office européen des brevets**

(19)

(11) Veröffentlichungsnummer: **0 052 183**

**A2**

(12) **EUROPÄISCHE PATENTANMELDUNG**

(21) Anmeldenummer: **81106357.7**

(22) Anmeldetag: **17.08.81**

(51) Int. Cl.³: **H 04 N 1/46**

(30) Priorität: **14.11.80 DE 3042966**

(43) Veröffentlichungstag der Anmeldung:
**26.05.82 Patentblatt 82/21**

(84) Benannte Vertragsstaaten:
**AT BE CH FR GB IT LI NL SE**

(71) Anmelder: **DR.-ING. RUDOLF HELL GmbH**
**Grenzstrasse 1-5**
**D-2300 Kiel 14(DE)**

(72) Erfinder: **Brand, Gerd, Dr.**
**Pappelweb 3b**
**D-3304 Didderse(DE)**

(72) Erfinder: **Niemeier, Hubert, Dr.**
**Wakenitzstrasse 4**
**D-2301 Raisdorf(DE)**

(54) **Verfahren zur Reproduktion von Halbtonbildern in der Faksimiletechnik.**

(57) Verfahren zur Reproduktion von Farbbildern in der Faksimiletechnik, die in codierter Form als Schwarz/Weiß - Grautonbilder aufgezeichnet sind, wobei der Schwarzauszug des Farbbildes in umkomprimierter Form als Luminanzsignal Y, das nach der Formel $Y = a_1R + a_2G + a_3B$ gewonnen wird, wobei R, G und B die bei der Bildabtastung gewonnenen Farbmeßwertsignale sind und die Farbsignale als Farbdifferenzsignale R-Y und B-Y in komprimierter Form neben dem Schwarz/Weiß-Auszug aufgezeichnet sind. Das Schwarz/Weiß-Grautonbild (1, 2 und 3) wird punkt- und zeilenweise mittels einer Schwarz/Weiß Fernsehkamera (4) abgetastet, und die von der Fernsehkamera gelieferten Signale einer Abtastzeile werden durch den einzelnen Signalabschnitten Y, R-Y und B-Y zugeordnete Zeilenspeicher entschachtelt. Diese Farbdifferenzsignale R-Y und B-Y werden dekomprimiert und nach der Dekompression die Farbdifferenzsignale zusammen mit den Luminanzsignalen in die Farbmeßwerte R, G und B dematriziert und als Farbbild wieder aufgezeichnet.

./...

EP 0 052 183 A2

Fig. 1

Dr.-Ing. Rudolf Hell GmbH
Grenzstraße 1 - 5
2300 Kiel 14

Kiel, den 11. Nov. 1980
Lf/Brü

Patentanmeldung Nr. 80/551

Kennwort: "Vorschaueinrichtung"

Verfahren zur Reproduktion von Halbtonbildern in der
Faksimiletechnik

Die vorliegende Erfindung betrifft ein Verfahren zur Reproduktion von Halbtonbildern in der Faksimiletechnik, die in
codierter Form als Schwarz/Weiß/Grau-Tonbilder aufgezeichnet
sind, wobei der Schwarzauszug des Farbbildes in unkomprimierter
Form als Luminanzsignal Y, das nach der Formel
$Y = a_1R + a_2G + a_3B$ gewonnen wurde, wobei R, G und B
die bei der Bildabtastung gewonnenen Farbmeßwerte sind und
die Farbsignale als Farbdifferenzsignale R - Y und B - Y in
komprimierter Form neben dem Schwarz/Weiß-Auszug aufgezeichnet
sind.

In einer parallel laufenden Patentanmeldung der Anmelderin
ist ein Farbfaksimileübertragungsverfahren vorgeschlagen,
bei dem die bei einer trichromatischen Abtastung einer Farbvorlage gewonnenen Farbmeßwertsignale R, G und B nicht in zeilensequentieller Folge übertragen werden, sondern bei dem zur
Bandbreitenkompression zuerst eine Umwandlung in Chrominanz/
Luminanzsignale dergestalt vorgenommen wird, daß ein Luminanz-

signal $Y = a_1R + a_2G + a_3B$ und Farbdifferenzsignale

R - Y und B - Y gebildet werden. Für die Faktoren a, mit denen das Luminanzsignal Y gebildet wird, werden vorzugsweise folgende

Werte verwendet.

$a_1 = 0,3$

$a_2 = 0,59$

$a_3 = 0,113$.

Die Art der Matrizierung ist in der Fernsehtechnik bekannt und entsprechende Matrizierungsschaltungen, die die vorgenannten Operationen durchführen, sind in der Fernsehtechnik Stand der Technik.

Nach dieser Matrizierung erfolgt die Übertragung der Signale nicht in üblicher Weise, sondern die Chrominanzsignale, d. h.

die Farbdifferenzsignale werden komprimiert und in der Totzeit, die bei Abtastung des Farboriginals von Zeile zu Zeile auftritt, übertragen, während das Luminanzsignal als Schwarz/Weiß-Auszug des Farbbildes normal, d. h. während der Abtastung der Zeile übertragen wird. Bei Trommelabtastern tritt die Totzeit bei der Abtastung der Einspannlücke des Originals auf der Trommel auf und bei Flachbettabtastern oder Flying-Spot Abtastern beim Rücklauf von Zeile zu Zeile.

Bei dem vorgeschlagenen Verfahren kann am Empfangsort das Farbbild wieder nach Dekompression der Farbdifferenzsignale und Rückgängigmachung der Verschachtelung sowie der Matrizierung, d. h. Wiedergewinnung der Farbmeßwertsignale, wieder aufgezeichnet werden.

Es kann aber auch das Bild mit Hilfe eines herkömmlichen Schwarz/Weiß-Faksimileempfängers derart aufgezeichnet werden, daß das Luminanzsignal Y als Schwarz/Weiß-Auszug des Farbbildes, d. h. als Schwarz/Weiß-Bild normal aufgezeichnet wird und daß die komprimierten Farbdifferenzsignale R - Y und B - Y an den Seiten des Schwarz/Weiß-Bildes in komprimierter Form aufgezeichnet werden. So hat man auf einfache Weise ein Schwarz/Weiß-Bild des Farbbildes, das sogleich in sichtbarer Form das Bild enthält und auch die Farbinformation in komprimierter Form speichert, so daß dieses Bild vorzüglich zum Archivieren am Empfangsort geeignet ist.

Der vorliegenden Erfindung liegt die Aufgabe zugrunde, ein Verfahren und eine Einrichtung anzugeben, mit der diese in codierter Form aufgezeichneten Farbbilder wieder in reelle Farbbilder umgewandelt werden können.

Die Erfindung erreicht dies durch die im kennzeichnenden Teil des Anspruchs 1 angegebenen Merkmale.

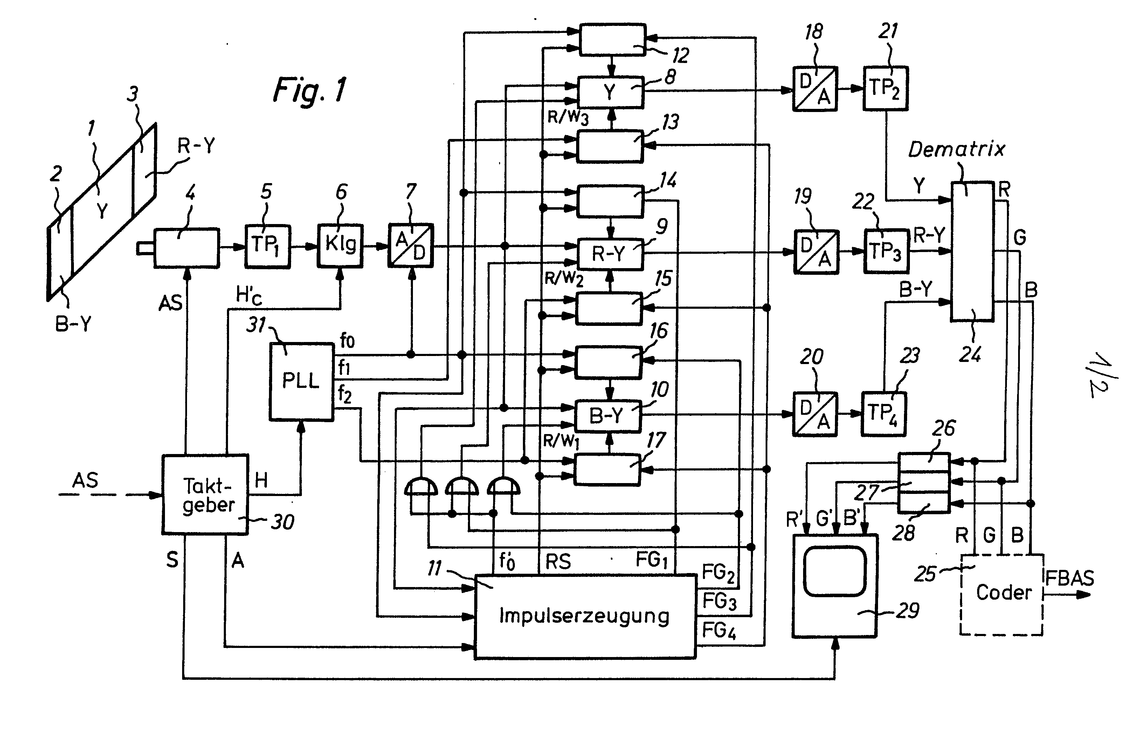

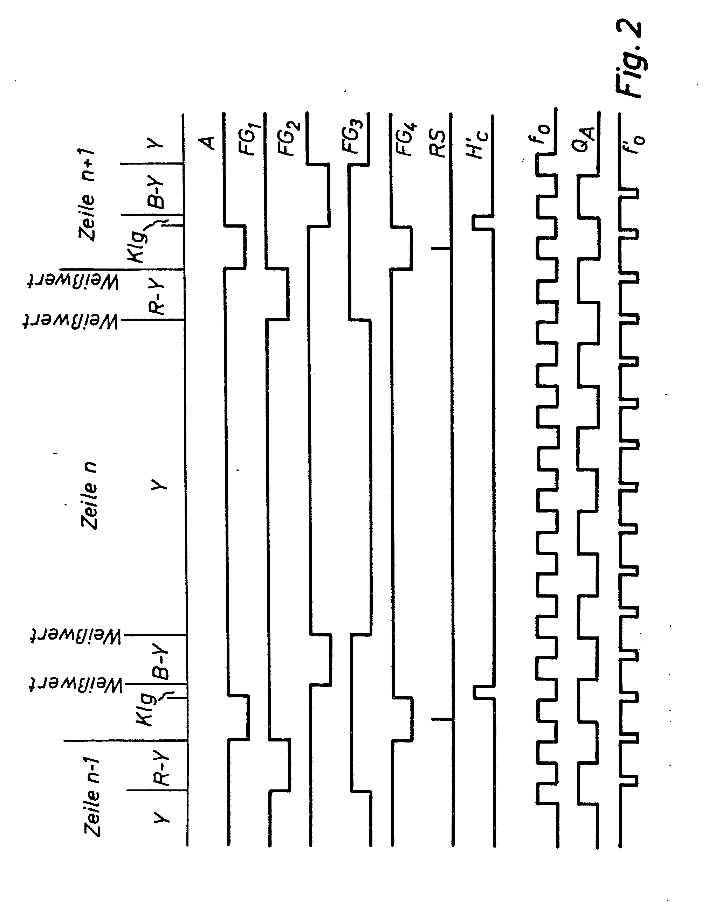

Eine Einrichtung zur Durchführung des Verfahrens ist im kennzeichnenden Teils des Anspruchs 2 wiedergegeben. Diese und weitere Merkmale der Erfindung gehen aus den im folgenden beschriebenen Figuren 1 und 2 hervor. Es zeigen

Fig. 1. ein Schaltbild der erfindungsgemäßen Einrichtung und
Fig. 2. ein Impulsdiagramm für die Fig. 1.

Fig. 1 zeigt das empfangene und aufgezeichnete Grautonbild 1, daß das unkomprimierte Schwarz/Weiß-Bild 1 (Y) und an den Seiten dieses Bildes die komprimiert aufgezeichneten Farbdifferenzsignale 2 (B - Y) und 3 (R - Y) zeigt. Dieses Grautonbild 1, 2, 3 wird in der Vorschaueinrichtung mit einer konventionellen Schwarz/Weiß-Kamera 4 oder mit einem CCD-Sensor abgetastet. Über einen Tiefpaßfilter 5 $(TP_1)$ und eine Klemmstufe 6 (Klg), in der auf den Signalwert geklemmt wird, der zu dem Referenzgrau der Vorlage gehört, gelangt das Videosignal auf einen Analog-Digitalwandler 7. Von dort wird es auf die 3 Zeilen-speicher 8 (Y); 9 (R - Y) und 10 (B - Y) und auf eine Impulserzeugerstufe 11 geführt. In der Impulserzeugungsstufe 11 kann man aus dem Digitalsignal auf einfache Weise den eingetasteten Weißwert erkennen, der Anfang und Ende der beiden Farbdifferenzsignale kennzeichnet. Jedem der drei Zeilenspeicher 8, 9 und 10 sind jeweils Adressenzähler 12, 13; 14, 15 und 16, 17 zugeordnet, die das Ein- und Auslesen aus diesen Speichern vornehmen. Durch eine geeignete Ansteuerung der drei Zeilenspeicher 8, 9 und 10 erreicht man eine Trennung von Luminanzsignal Y und den Farbdifferenzsignalen R - Y und B - Y. Nach der Dekompression der 3 Signale durch schnelles Einlesen und langsames Auslesen der Information in den betreffenden Zeilenspeichern, die durch entsprechende Ansteuerung der Schreib- bzw. Lesezähler der Speicher geschieht, erfolgt eine Digital-Analog-Wandlung in den Analog-Digitalwandlern 18, 19 und 20. Über 3 Tiefpaßfilter 21, 22 und 23 ($TP_2$, $TP_3$, $TP_4$) gelangen das Luminanzsignal Y und die beiden Farbdifferenzsignale R - Y und B - Y auf eine Dematrix 24, die daraus wieder, wie in der Fersehtechnik bekannt, die Farbwertsignale R, G und B erzeugt. Diese Signale können entweder auf einen PAL-, NTSC- oder SECAM-Coder 25 gegeben werden, um das Foto in Farbe z. B. in eine Nachrichtensendung des Farbfernsehens einzublenden. Andererseits können die Signale nach Entzerrung der nichtlinearen Bildröhrenkennlinie in Entzerrungsstufen 26, 27 und 28 einem Farbfernsehmonitor 30 zur Beurteilung des empfangenen Grautonbildes in Farbe zugeführt werden.

Ein Fernsehtaktgeber 30, der über ein AS-Signal extern synchronisierbar sein kann, erzeugt die üblichen Fernseh-Takte
H, A, S, AS und den modifizierten Klemmimpuls $H'_c$. Die
Frequenzen $f_o$, $f_1$ und $f_2$ am Ausgang eines Phasenregelkreises 31 (PLL) sind damit der Horizontalfrequenz H gekoppelt.
Es gilt bei einem Kompressionsfaktor N folgender Zusammenhang:

$$f_1 = \frac{N}{2 + N} \times f_o \quad ; \quad f_2 = \frac{1}{2 + N} f_o$$

Fig. 2 zeigt den Aufbau einer Zeile und die Impulsdiagramme
der Impulse, die zur Steuerung der Einrichtung benötigt werden.
Mit der Frequenz $f_o$ wird die Signalinformation in alle drei
Zeilenspeicher 8, 9 und 10 eingeschrieben, mit $f_1$ der
Inhalt des Zeilenspeichers 8 (Y) und mit $f_2$ der Inhalt des
Zeilenspeichers 9 (R - Y) und 10 (B - Y) ausgelesen. Die Steuerung
der einzelnen Adreßzähler 12, 13; 14, 15 und 16, 17 erfolgt
über die Freigabesignale $FG_1$ bis $FG_4$, die der Zeilenspeicher über die Schreib/Lese-Signale $R/W_1$ bis $R/W_3$. Das
Freigabesignal $FG_1$ liegt auf logisch "0", wenn das Farbdifferenzsignal R - Y von der Kamera abgetastet wird. Ebenso
sind $FG_2$ bzw. $FG_3$ logisch "0", wenn das Farbdifferenzsignal B - Y bzw. das Luminanzsignal Y abgetastet werden.
Logisch "0" an den Freigabeeingängen $FG_1$, $FG_2$ und $FG_3$

bedeutet, daß die Adreßzähler "Schreiben" aktiviert sind. Das Freigabesignal $FG_4$ bestimmt den Auslesemodus. Falls $FG_4$ auf logisch "1" liegt, sind alle Adreßzähler "Lesen" aktiviert. Welche Adreßzähler mit dem betreffenden Zeilenspeicher verbunden wird, bestimmen die Schreib/Lese-Signale R/W. Liegt R/W auf logisch "1", wird der Speicherinhalt ausgelesen, liegt $R_W$ auf logisch "0", wird in den Speicher eingeschrieben. Gesteuert durch dieses Signal sind die Adreßzähler "Schreiben" (R/W = "0") bzw. "Lesen" (R/W = "1") mit den Zeilenspeichern verbunden.

Mit dem Rücksetzimpuls RS werden alle Adreßzähler in einen definierten Anfangszustand gesetzt.

Dr.-Ing. Rudolf Hell GmbH          Kiel, den 12. Nov. 1980

Grenzstraße 1 - 5                  Lf/Brü

2300 Kiel 14


Patentanmeldung 80/551

Kennwort: "Vorschaueinrichtung"


## Patentansprüche


1.  Verfahren zur Reproduktion von Farbbildern in der Faksimiletechnik, die in codierter Form als Schwarz/

Weiß-Grautonbilder aufgezeichnet sind, wobei der Schwarzauszug des Farbbildes in unkomprimierter Form als Luminanzsignal Y, das nach der Formel

$Y = a_1 R + a_2 G + a_3 B$ gewonnen wird, wobei

R, G und B die bei der Bildabtastung gewonnenen Farbmeßwertsignale sind und die Farbsignale als Farbdifferenzsignale R - Y und B - Y in komprimierter Form neben dem Schwarz/Weiß-Auszug aufgezeichnet sind, dadurch gekennzeichnet,

daß das Schwarz/Weiß-Grautonbild (1, 2, und 3) punkt-und zeilenweise mittels einer Schwarz/Weiß-Fernsehkamera (4) abgetastet wird,

daß die von der Fersehkamera gelieferten Signale einer Abtastzeile durch den einzelnen Signalabschnitten Y, R - Y und B - Y zugeordnete Zeilenspeicher entschachtelt werden,

daß diese Farbdifferenzsignale R - Y und B - Y
dekomprimiert werden und

daß nach der Dekompression die Farbdifferenzsignale
zusammen mit den Luminanzsignalen in die Farbmeßwerte
R, G und B dematriziert und als Farbbild wieder aufgezeichnet werden.

2. Einrichtung zur Durchführung des Verfahrens nach
Anspruch 1, dadurch gekennzeichnet, daß eine Schwarz/
Weiß-Fernsehkamera (4) zur Abtastung der auf Schwarz/
Weiß-Aufzeichnungsträger codiert aufgezeichneten Farbbilder (1, 2 und 3) vorgesehen ist, über einen Tiefpaßfilter (5), eine Klemmstufe (6, Klg) und einen AD-Wandler (7)
mit jeweils 3 Zeilenspeichern (8, 9, 10) für das Luminanzsignal Y und die Farbdifferenzsignale R - Y, B - Y
verbunden ist,

daß den Zeilenspeichern jeweils 2 Adreßzähler (12, 13;
14, 15 und 16, 17) zugeordnet sind, von denen einer die
Einlesefunktion (12, 14, 16) und der andere jeweils die
Auslesefunktion (13, 15, 17) der Zeilenspeicher vornimmt,
wobei in den Zeilenspeichern für die Farbdifferenzsignale
eine Dekompression der Signale dergestalt vorgenommen
wird, daß die Signale mit Hilfe der Einlese- und Auslesezähler mit schneller Frequenz eingelesen und mit langsamer Frequenz ausgelesen werden,

daß an die Ausgänge der Zeilenspeicher (8, 9 und 10) Digital-Analog-Wandler (18, 19 und 20) angeschlossen sind, denen jeweils Tiefpaßfilter (21, 22 und 23) nachgeschaltet sind, deren Ausgänge mit einer Dematrizierungsschaltung (24) verbunden sind, innerhalb der das Luminanzsignal Y und die Farbdifferenzsignale R - Y und B - Y zu den Farbmeßwertsignalen R, G und B dematriziert werden, daß die R-, G- und B-Ausgänge der Dematrizierungsschaltung (24) an einen Farbfernsehcoder (25) zur direkten Einspeisung in ein Fernsehnetz oder über Entzerrungsstufen (26, 27 und 28) an einen Farbfernsehmonitor (29) anschaltbar sind und

daß ein Fernsehtaktgeber (30) zur Steuerung der Fernsehkamera (4) und des Monitors (29) sowie einer Impulserzeugungsschaltung (11) und eines Phasenregelkreises (31) vorgesehen ist, wodurch die Synchronisierung in der Steuerung der Fernsehkamera des Monitors und der Dekompression der Zeilenspeicher steuerbar ist.

Fig. 1

1/2

0052183

Fig. 2

0052183

2/2